# EUROPÄISCHE PATENTSCHRIFT

(11) **EP 3 228 833 B1**
(45) Veröffentlichungstag und Bekanntmachung des Hinweises auf die Patenterteilung: **01.08.2018**
(21) Anmeldenummer: 16163769.9
(22) Anmeldetag: 05.04.2016
(51) Int. Cl.: F01D 25/00, F01D 25/24

(54) **VERBINDUNGSANORDNUNG FÜR BAUTEILE AUS KERAMISCHEN FASERVERBUNDWERKSTOFFEN EINES TURBINENZWISCHENGEHÄUSES**
CONNECTION ASSEMBLY FOR COMPONENTS MADE OF CERAMIC FIBER COMPOSITE MATERIALS OF AN INTERMEDIATE TURBINE HOUSING
DISPOSITIF DE RACCORDEMENT POUR COMPOSANTS EN MATIÈRES COMPOSITES FIBREUSES CÉRAMIQUES D'UN CARTER INTERMÉDIAIRE DE TURBINE

(43) Veröffentlichungstag der Anmeldung: 11.10.2017
(73) Patentinhaber: MTU Aero Engines AG, 80995 München (DE)
(72) Erfinder: Böck, Alexander, 82288 Kottgeisering (DE)

(56) Entgegenhaltungen:
- EP-A1- 1 607 582
- EP-A2- 2 604 805
- WO-A1-2015/031764
- WO-A2-2015/065563
- US-A1- 2011 008 163

## Beschreibung

Die vorliegende Erfindung betrifft eine Verbindungsanordnung umfassend ein erstes Bauteil und ein zweites Bauteil, wobei das erste Bauteil und das zweite Bauteil in einem Verbindungsbereich überlappend zueinander angeordnet sind; ein Verbindungsmittel, das mit dem ersten Bauteil und dem zweiten Bauteil derart in Kontakt steht, dass das erste Bauteil und das zweite Bauteil im Verbindungsbereich klemmend aneinander anliegen, wobei das Verbindungsmittel eine am ersten Bauteil und am zweite Bauteil aufliegende Klammer umfasst und eine Schraubverbindung aufweist, die dazu eingerichtet ist, die Klammer am ersten und am zweiten Bauteil zu fixieren.

Zur Fixierung eines Rotor-Lagers einer Gasturbine, insbesondere Fluggasturbine sind im Bereich eines Turbinenzwischengehäuses Streben zwischen einem Triebwerksgehäuse und einer ringförmigen Haltestruktur angebracht. Diese Streben erstrecken sich durch einen Heißgas führenden Ringkanal. Da das Turbinenabgas (Heißgas) diese Strebenstruktur im Ringkanal kreuzen muss, um beispielsweise zu einer Niederdruckturbine zu gelangen, und dabei die tragenden Strukturen nicht benetzen darf, werden diese Strukturen bzw. Streben mit konturierten Platten und stromlinienförmige Strebenverkleidungen ummantelt. Die komplette Ummantelung ist dabei über Haken am Gehäuse befestigt, wobei radial innere Platten über die Strebenverkleidung gehalten werden. Die Platten sind dabei mittels eines Überlappungsbereichs (geschliffene Überlappung) und geschraubter Klammern an den Strebenverkleidungen befestigt. Dabei weisen die Verschraubungen einen Stehbolzen auf, der in die Strebenverkleidung eingelötet ist.

Um bei Gasturbinen, insbesondere Fluggasturbinen, aber auch bei anderen bisher weitgehend aus Metall hergestellten Maschinen Gewicht einzusparen und den Wirkungsgrad zu erhöhen, gibt es eine Bestrebung, metallische Bauteile durch Bauteile aus keramischen Faserverbundwerkstoffen bzw. -materialien (CMC) zu ersetzen. Die oben beschriebenen Gehäuseplatten und Strebenverkleidungen können aufgrund der bisherigen Technik eines angelöteten Stehbolzens nicht aus CMC hergestellt werden, weil bei CMC-Bauteilen das Löten nicht möglich ist.

Eine Verbindungsanordnung zwischen Bauteilen, die vorwiegend aus CMC bestehen, und in der Umfangsrichtung nebeneinander angeordnet sind, ist aus der WO 2015/031764 A1 bekannt.

Es ist daher Aufgabe der Erfindung eine Verbindungsanordnung bereitzustellen, welche die obigen Nachteile vermeidet.

Zur Lösung dieser Aufgabe wird vorgeschlagen, dass das erste Bauteil und das zweite Bauteil aus einem keramischen Faserverbundmaterial (CMC) bzw. aus keramischen Faserverbundwerkstoffen hergestellt sind, wobei das erste Bauteil einen Halteabschnitt aufweist mit einer der Klammer zugewandten Vorderseite, einer von der Klammer abgewandten Rückseite und einer Aufnahmeöffnung, und dass die Schraubverbindung einen durch die Aufnahmeöffnung hindurchgehenden Bolzenabschnitt aufweist, der an seinem von der Klammer abgewandten Ende einen zur Längsachse des Bolzenabschnitts geneigt, insbesondere orthogonal verlaufenden Abstützabschnitt aufweist, der an der Rückseite des Halteabschnitts anliegt.

Der Abstützabschnitt des Bolzenabschnitts hintergreift den Halteabschnitt, so dass die Klammer am Halteabschnitt befestigt werden kann. Der Bolzenabschnitt ist nicht fest mit dem Halteabschnitt bzw. dem ersten Bauteil verbunden, so dass keine materialschlüssige Verbindung, wie etwa das bekannte Anlöten eines Stehbolzens, zwischen dem ersten Bauteil und dem Bolzenabschnitt erforderlich ist. Somit kann mittels des Halteabschnitts und des Bolzenabschnitts unter Vermittlung der Klammer eine Verbindung zwischen zwei Bauteilen aus einem keramischen Faserverbundmaterial hergestellt werden.

Weiterbildend wird vorgeschlagen, dass der Halteabschnitt entlang seiner Vorderseite einen konvexen Abschnitt und einen konkaven Abschnitt aufweist, wobei die Klammer an dem konkaven Abschnitt der Vorderseite abgestützt ist. Dabei ist es weiter bevorzugt, dass der Halteabschnitt entlang seiner Rückseite einen konkaven Abschnitt und einen konvexen Abschnitt aufweist, wobei der Abstützabschnitt der Schraubverbindung an dem konkaven Abschnitt der Rückseite abgestützt ist. Die konkaven bzw. konvexen Abschnitte auf der Vorderseite bzw. der Rückseite sind zueinander komplementär, das heißt, dass dem konvexen Abschnitt auf der Vorderseite ein konkaver Abschnitt auf der Rückseite des Halteabschnitts zugeordnet werden kann und umgekehrt. Durch die aufeinander folgende Ausgestaltung auf der Vorderseite von einem konvexen Abschnitt und einem konkaven Abschnitt bzw. auf der Rückseite von einem konkaven Abschnitt und einem konvexen Abschnitt, weist der Halteabschnitt eine geschwungen oder S-förmige Ausgestaltung auf. Zwischen den gekrümmten Abschnitten weist der Halteabschnitt bevorzugt noch einen geradlinigen Abschnitt auf, so dass die gekrümmten Abschnitte nicht direkt ineinander übergehen.

Die jeweiligen konkaven Abschnitte auf der Vorderseite und der Rückseite ermöglichen die insbesondere formschlüssige Aufnahme der Klammer bzw. Abstützabschnitts des Bolzens.

Weiter ist es bevorzugt, dass die Öffnung des Halteabschnitts schlitzartig ausgeführt ist mit einem offenen Ende, derart dass der Bolzenabschnitt durch das offene Ende in die schlitzartige Öffnung einführbar ist. Die schlitzartige Öffnung erlaubt das Einführen des Bolzenabschnitts, wobei der Abstützabschnitt des Bolzens entlang der Rückseite des Halteabschnitts geführt werden kann und dann seitlich der schlitzartigen Öffnung am Halteabschnitt anliegt. Die schlitzartige Öffnung vereinfacht das Einführen des Bolzenabschnitts. Ferner ermöglicht die schlitzartige Öffnung auch im verbundenen Zustand eine relative Bewegung zwischen Bolzenabschnitt und Halteabschnitt, insbesondere in Abhängigkeit der wirkenden Kräfte.

Weiterbildend wird vorgeschlagen, dass die Klammer einen dem Halteabschnitt des ersten Bauteils zugewandten ersten Auflageabschnitt aufweist mit einer auf dem ersten Bauteil, insbesondere dem konkaven Abschnitt der Vorderseite aufliegenden ersten Klemmfläche, wobei die erste Klemmfläche vorzugsweise gekrümmt, insbesondere konvex ausgebildet ist. Die erste Klemmfläche weist insbesondere eine zum konkaven Abschnitt der Vorderseite des Halteabschnitts komplementäre Ausgestaltung auf, so dass neben einer kraftschlüssigen Verbindung auch eine formschlüssige Verbindung ermöglicht ist.

Es ist ferner bevorzugt, dass die Klammer einen dem Verbindungsbereich zugwandten zweiten Auflageabschnitt aufweist mit einer auf dem zweiten Bauteil aufliegenden zweiten Klemmfläche, wobei die zweite Klemmfläche vorzugsweise im Wesentlichen eben ausgebildet ist. Die zweite Klemmfläche übt auf den Verbindungsbereich, in dem sich das erste Bauteil und das zweite Bauteil überlappen, eine Klemmkraft aus, so dass das erste Bauteil und das zweite Bauteil gegeneinander gepresst werden und im Verbindungsbereich eine dichte Verbindung der beiden Bauteil ermöglicht ist.

Ferner wird vorgeschlagen, dass die Klammer einen den ersten Auflageabschnitt und den zweiten Auflageabschnitt verbindenden Zentralabschnitt aufweist, wobei der Zentralabschnitt eine vom Halteabschnitt abgewandte Oberseite aufweist, die im Wesentlichen eben ausgeführt ist. Im Zentralabschnitt ist vorzugsweise die Öffnung enthalten, durch die sich der Bolzenabschnitt hindurch erstreckt. Der durch die Öffnung hindurch gehende und sich oberhalb der Oberseite des Zentralabschnitts erstreckende Teil des Bolzenabschnitts weist vorzugsweise ein Außengewinde auf, auf das eine Schraubenmutter mit Innengewinde aufschraubbar ist bzw. aufgeschraubt ist. Die Schraubenmutter liegt im festgezogenen Zustand der Schraubverbindung auf der Oberseite des Zentralabschnitts der Klammer auf. Die Klammer ist im festgezogenen Zustand der Verbindungsanordnung also zwischen der Schraubenmutter und dem Abstützabschnitt des Bolzenabschnitts angeordnet und festgeklemmt, so dass die Klammer mittels ihrer beiden Klemmflächen auf den Halteabschnitt bzw. den Verbindungsbereich drückt, um die beiden Bauteile aneinander zu befestigen.

Damit die wirkenden Kräfte aufgenommen und übertragen werden können, ist es bevorzugt, dass im Halteabschnitt Faserlagen des Keramikfaserverbundmaterials (CMC) durchlaufend gelegt sind. Hierdurch kann ein Erhalten der Vorspannkraft des Halteabschnitts bei Verschleiß bzw. unter thermischen Einwirkungen erreicht werden.

Gemäß einem weiteren Aspekt betrifft die Erfindung auch ein Turbinenzwischengehäuse einer Gasturbine, insbesondere Fluggasturbine, mit einem Heißgas führenden Ringkanal, umfassend wenigstens ein erstes Gehäuseelement, insbesondere ein Fairing des Turbinenzwischengehäuses; wenigstens ein zweites Gehäuseelement, insbesondere ein Panel eines Turbinenzwischengehäuses. Dabei ist es vorgesehen, dass das Turbinenzwischengehäuse wenigstens eine Verbindungsanordnung mit wenigstens einem der oben beschriebenen Merkmale aufweist, wobei das erste Gehäuseelement das erste Bauteil aus keramischem Faserverbundmaterial (CMC) bildet und das zweite Gehäuseelement das zweite Bauteil aus keramischem Faserverbundmaterial (CMC) bildet.

Dabei ist es bevorzugt, dass der Verbindungsbereich zwischen dem ersten Gehäuseelement und dem zweiten Gehäuseelement den Heißgas führenden Ringkanal abdichtet. Diese Abdichtung erfolgt durch die Überlappung der beiden Gehäuseelemente und die durch die Verbindungsanordnung ausgeübte Klemmkraft mittels des Halteabschnitts, der Klammer und des Bolzenabschnitts.

Schließlich betriff die Erfindung auch eine Gasturbine, insbesondere Fluggasturbine, mit einem solchen Turbinenzwischengehäuse.

Nachfolgend wird die Erfindung unter Bezugnahme auf die anliegenden Figuren beispielhaft und nicht einschränkend beschrieben.
Fig. 1 zeigt in einer vereinfachten und schematischen Perspektivdarstellung ein erstes Bauteil, insbesondere einen Teil einer Strebenverkleidung eines Turbinenzwischengehäuses einer Gasturbine, mit exemplarisch zwei Halteabschnitten und exemplarisch einer Klammer.
Fig. 2 zeigt in einer vergrößerten schematischen Perspektivdarstellung einer Schraubverbindung der Verbindungsanordnung.
Fig. 3 zeigt einen schematischen Querschnitt durch die Verbindungsanordnung etwa entsprechend der Schnittlinie III-III der Figur 1.

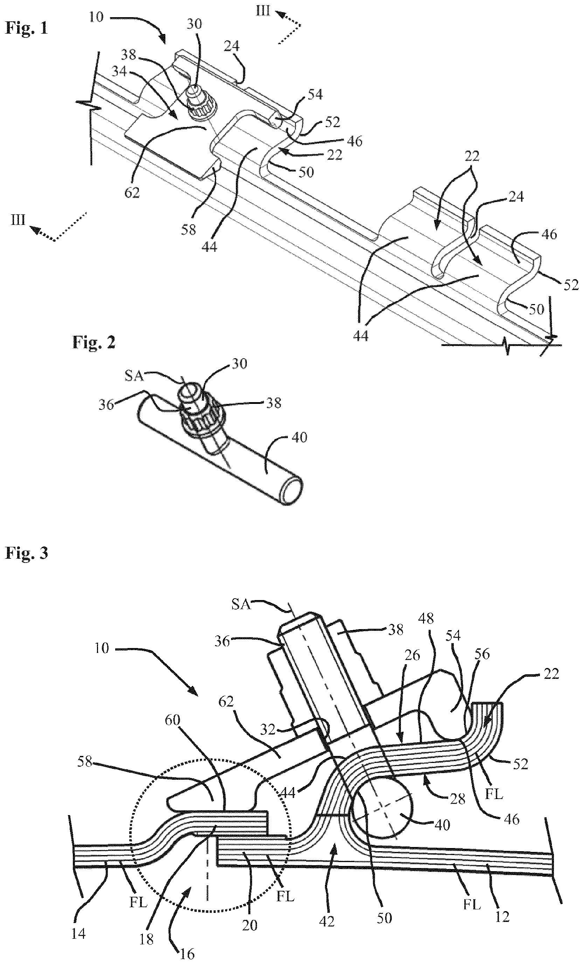

Eine Verbindungsanordnung 10, die aus den Fig. 1 und 3 ersichtlich ist und unter Bezugnahme auf diese beiden Figuren nachfolgend beschrieben wird, umfasst ein erstes Bauteil 12 und ein nur in der Fig. 3 gezeigtes zweites Bauteil 14. Die beiden Bauteile 12, 14 sind aus keramischen Faserverbundwerkstoffen bzw. Faserverbundmaterial hergestellt. Das erste Bauteil 12 ist vorzugsweise ein erstes Gehäuseelement, insbesondere ein Fairing bzw. eine Strebenverkleidung eines hier nicht dargestellten Turbinenzwischengehäuses. Das zweite Bauteil ist bevorzugt ein zweites Gehäuseelement, insbesondere ein einen Heißgas führenden Ringkanal begrenzendes Panel des Turbinenzwischengehäuses.

Das erste Bauteil 12 und das zweite Bauteil 14 überlappen sich in einem Verbindungsbereich 16. Dabei liegt ein Überlappungsabschnitt 18 des zweiten Bauteils 14 auf dem Überlappungsabschnitt 20 des ersten Bauteils 12. Im Verbindungsbereich 16 wird durch die Überlappung der beiden Bauteile 12, 14 eine Abdichtung am Übergang zwischen den beiden Bauteilen 12, 14 erreicht.

Am ersten Bauteil 12 sind in Fig. 1 zwei Halteabschnitte 22 ersichtlich, die einstückig am ersten Bauteil 12 ausgebildet sind. Der Halteabschnitt 22 weist eine längliche Öffnung 24 auf, die auch als schlitzartige Öffnung bezeichnet werden kann. Der Halteabschnitt 22 weist eine Vorderseite 26 und eine Rückseite 28 auf. In der Öffnung 24 ist eine Schraubverbindung, insbesondere deren Bolzenabschnitt 30 aufgenommen. Der Bolzenabschnitt 30 erstreckt nach oben hin durch eine Öffnung 32 in einer auf dem zweiten Bauteil 14 und dem Halteabschnitt 22 aufliegenden Klammer 34. Der Bolzenabschnitt 30 weist in seinem vom Halteabschnitt 22 abgewandten oberen Teil einen Gewindeabschnitt bzw. ein Außengewinde auf. Mit dem Gewindeabschnitt 36 ist eine Schraubenmutter 38 mit entsprechendem Innengewinde verbindbar. Die Schraubenmutter 38 liegt im festgezogenen Zustand auf der Klammer 34 auf. Die schlitzartige Öffnung 24 kann beispielsweise in den Halteabschnitt 2 gefräst werden.

Damit die Schraubverbindung festgezogen werden kann, weist sie einen mit dem Bolzenabschnitt 30 verbundenen Abstützabschnitt 40 auf, was am besten aus der Fig. 2 ersichtlich ist. Der Abstützabschnitt 40 ist vorzugsweise geneigt, insbesondere orthogonal zum Bolzenabschnitt 30 bzw. der Schraubverbindungsachse SA ausgeführt. Vorzugsweise sind der Bolzenabschnitt 30 und der Abstützabschnitt 40 einstückig ausgeführt. Der Bolzenabschnitt 30 und der Abstützabschnitt 40 können zusammen auch als T-förmiges Element bezeichnet werden. Beim Festziehen der Schraubenmutter 38 wird die Klammer 34 gegen die Ober- bzw. Vorderseite 26 des Halteabschnitts 22 gedrückt und der Abstützabschnitt 40 wird gegen die Rückseite 28 des Halteabschnitts 22 gedrückt.

Der Halteabschnitt 22 weist auf seiner Vorderseite 26 ausgehend von einem Übergangsbereich 42 einen konvexen Abschnitt 44 und einen konkaven Abschnitt 46 auf. Diese beiden Abschnitte 44, 46 können durch einen geradlinigen Abschnitt 48 miteinander verbunden sein. Auf seiner Rückseite 28 weist der Halteabschnitt 22 ausgehend vom Übergangsbereich 42 einen konkaven Abschnitt 50 und einen konvexen Abschnitt 52 auf. Im konkaven Abschnitt 50 auf der Rückseite des Halteabschnitts 22 ist der Abstützabschnitt 40 der Schraubverbindung aufgenommen. Der Abstützabschnitt 40 weist vorzugsweise einen kreisförmigen Querschnitt auf, so dass er mit einem Teil seiner zylindrischen Außenfläche an dem konkaven Abschnitt 50 der Rückseite des Halteabschnitts 22 anliegt. Bevorzugt ist der Krümmungsradius des konkaven Abschnitts 50 im Wesentlichen gleich groß wie der Radius des kreisförmigen Querschnitts des Abstützabschnitts.

Die Klammer 34 weist einen dem Halteabschnitt 22 des ersten Bauteils 12 zugewandten ersten Auflageabschnitt 54 auf mit einer auf dem ersten Bauteil 12, insbesondere dem konkaven Abschnitt 46 der Vorderseite 26 aufliegenden ersten Klemmfläche 56. Die erste Klemmfläche 56 ist vorzugsweise gekrümmt, insbesondere ist sie konvex ausgebildet. Durch die im Wesentlichen komplementäre Ausgestaltung der ersten Klemmfläche 56 und des konkaven Abschnitts 56 der Vorderseite 26 des Halteabschnitts 22 ergibt sich auch eine formschlüssige Verbindung zwischen der Klammer 34 und dem Halteabschnitt 22. Im verbundenen Zustand ist die Klammer 34 dadurch sicher am Halteabschnitt abgestützt. Ferner weist die Klammer 34 einen dem Verbindungsbereich zugwandten zweiten Auflageabschnitt 58 auf mit einer auf dem zweiten Bauteil 14 aufliegenden zweiten Klemmfläche 60. Die zweite Klemmfläche 60 ist vorzugsweise im Wesentlichen eben ausgebildet. Die Klammer 34 weist ferner einen den ersten Auflageabschnitt 54 und den zweiten Auflageabschnitt 58 verbindenden Zentralabschnitt 62 auf. Der Zentralabschnitt 62 hat vorzugsweise eine vom Halteabschnitt 22 abgewandte Oberseite, die im Wesentlichen eben ausgeführt ist.

Im verbundenen Zustand wird im Verbindungsbereich 16 der Überlappungsabschnitt 20 des ersten Bauteils in Richtung des zweiten Auflageabschnitts 58 der Klammer 34 gedrückt bzw. gezogen. Hierdurch wird der Überlappungsabschnitt 18 des zweiten Bauteils 14 zwischen dem Überlappungsabschnitt 20 und dem Auflageabschnitt 58 aufgenommen und festgeklemmt. Aufgrund der wirkenden Klemmkräfte wird zwischen dem ersten Bauteil 12 und dem zweiten Bauteil 14 eine dichte Verbindung ermöglicht. Der Halteabschnitt 22 dient dabei auch als eine Art Biegebalken, um beim Festklemmen bzw. beim Verspannen der Verbindungsanordnung eine ausreichende Deformation zu erreichen, so dass im Verbindungsbereich 16 eine gewünschte Dichtigkeit erhalten werden kann, insbesondere auch unter dem Einfluss von Verschleiß oder thermischen Verformungen.

Aus der Fig. 3 ist ferner rein schematisch ersichtlich, dass Faserlagen FL des Halteabschnitts 22 durchlaufend gelegt sind. Diese durchlaufenden Faserlagen geben dem Halteabschnitt 22 die erforderliche Stabilität und Elastizität, um die gewünschte Klemmwirkung bzw. Verspannung der Verbindungsanordnung 10 zu erreichen.

Durch die hier vorgestellte Verbindungsanordnung kann die gleiche Klemmwirkung erreicht werden, wie bei einer bekannten Variante mit angelötetem Stehbolzen. Da die Komponenten der Verbindungsanordnung nur gegeneinander verspannt sind und keine materialschlüssige Verbindung (z.B: Löten) notwendig ist, können mit dieser Verbindungsanordnung CMC-Bauteile aneinander befestigt werden.

Sind das erste Bauteil 12 und das zweite Bauteil 14 Gehäuseelemente eines Heißgas führenden Ringkanals eines Turbinenzwischengehäuses einer Gasturbine, kann durch die vorgestellte Verbindungsanordnung erreicht werden, dass keine metallischen Bauteile mit dem Ringkanal in Kontakt stehen, also nicht mit Heißgas benetzt werden. Metallische Bauteile, wie etwa die Schraubverbindung und die Klammer sind außerhalb des Ringkanals angeordnet und lediglich der Sperrluft ausgesetzt. Wenn keine metallischen Bauteile im Ringkanal vorhanden sind, kann auch die Temperatur des Heißgases erhöht werden.

Insgesamt ergibt sich eine sehr einfache und kostengünstig herstellbare Verbindungsanordnung für zwei Bauteile aus keramischen Faserverbundwerkstoffen. Zwei solche Bauteile können auch mittels mehrerer solcher Verbindungsanordnungen miteinander verbunden werden, wie dies auch in der Fig. 1 angedeutet ist.

### Bezugszeichenliste

- 10: Verbindungsanordnung
- 12: erstes Bauteil / erstes Gehäuseelement
- 14: zweites Bauteil / zweites Gehäuseelement
- 16: Verbindungsbereich
- 18: Überlappungsabschnitt des ersten Bauteils
- 20: Überlappungsabschnitt des zweiten Bauteils
- 22: Halteabschnitt
- 24: längliche Öffnung
- 26: Vorderseite des Halteabschnitts
- 28: Rückseite des Halteabschnitts
- 30: Bolzenabschnitt
- 32: Öffnung der Klammer
- 34: Klammer
- 36: Gewindeabschnitt
- 38: Schraubenmutter
- 40: Abstützabschnitt
- 42: Übergangsbereich
- 44: konvexer Abschnitt der Vorderseite
- 46: konkaver Abschnitt der Vorderseite
- 48: geradliniger Abschnitt
- 50: konkaver Abschnitt der Rückseite
- 52: konvexer Abschnitt der Rückseite
- 54: erster Auflageabschnitt
- 56: erste Klemmfläche
- 58: zweiter Auflageabschnitt
- 60: zweite Klemmfläche
- 62: Zentralabschnitt

## Patentansprüche

1. Verbindungsanordnung (10) umfassend
ein erstes Bauteil (12) und ein zweites Bauteil (14), wobei das erste Bauteil (12) und das zweite Bauteil (14) in einem Verbindungsbereich (16, 18, 20) überlappend zueinander angeordnet sind;
ein Verbindungsmittel, das mit dem ersten Bauteil (12) und dem zweiten Bauteil (14) derart in Kontakt steht, dass das erste Bauteil (12) und das zweite Bauteil (14) im Verbindungsbereich (16) klemmend aneinander anliegen, wobei das Verbindungsmittel eine am ersten Bauteil (12) und am zweite Bauteil (14) aufliegende Klammer (34) umfasst und eine Schraubverbindung (30, 38, 40) aufweist, die dazu eingerichtet ist, die Klammer (34) am ersten und am zweiten Bauteil (12, 14) zu fixieren,
wobei das erste Bauteil (12) und das zweite Bauteil (14) aus einem keramischen Faserverbundmaterial (CMC) hergestellt sind, wobei das erste Bauteil (12) einen Halteabschnitt (22) aufweist mit einer der Klammer (34) zugewandten Vorderseite (26), einer von der Klammer abgewandten Rückseite (28) und einer Aufnahmeöffnung (24), und wobei die Schraubverbindung (30, 38, 40) einen durch die Aufnahmeöffnung (24) hindurchgehenden Bolzenabschnitt (30) aufweist, der an seinem von der Klammer (34) abgewandten Ende einen zur Längsachse (SA) des Bolzenabschnitts (30) geneigt verlaufenden Abstützabschnitt (40) aufweist, der an der Rückseite (28) des Halteabschnitts (22) anliegt.

2. Verbindungsanordnung nach Anspruch 1, **dadurch gekennzeichnet, dass** der Halteabschnitt (22) entlang seiner Vorderseite (26) einen konvexen Abschnitt (44) und einen konkaven Abschnitt (46) aufweist, wobei die Klammer (34) an dem konkaven Abschnitt (46) der Vorderseite (26) abgestützt ist.

3. Verbindungsanordnung nach Anspruch 1 oder 2, **dadurch gekennzeichnet, dass** der Halteabschnitt (22) entlang seiner Rückseite (28) einen konkaven Abschnitt (50) und einen konvexen Abschnitt (52) aufweist, wobei der Abstützabschnitt (40) der Schraubverbindung an dem konkaven Abschnitt (50) der Rückseite (28) abgestützt ist.

4. Verbindungsanordnung nach einem der vorhergehenden Ansprüche, **dadurch gekennzeichnet, dass** die Öffnung (24) des Halteabschnitts (22) schlitzartig ausgeführt ist mit einem offenen Ende, derart dass der Bolzenabschnitt (30) durch das offene Ende in die schlitzartige Öffnung (24) einführbar ist.

5. Verbindungsanordnung nach einem der vorhergehenden Ansprüche, **dadurch gekennzeichnet, dass** die Klammer (34) einen dem Halteabschnitt (22) des ersten Bauteils (12) zugewandten ersten Auflageabschnitt (54) aufweist mit einer auf dem ersten Bauteil (12), insbesondere dem konkaven Abschnitt (46) der Vorderseite (26) aufliegenden ersten Klemmfläche (56), wobei die erste Klemmfläche (56) vorzugsweise gekrümmt, insbesondere konvex ausgebildet ist.

6. Verbindungsanordnung nach einem der vorhergehenden Ansprüche, **dadurch gekennzeichnet, dass** die Klammer (34) einen dem Verbindungsbereich (16) zugwandten zweiten Auflageabschnitt (58) aufweist mit einer auf dem zweiten Bauteil (14) aufliegenden zweiten Klemmfläche (60), wobei die zweite Klemmfläche (60) vorzugsweise im Wesentlichen eben ausgebildet ist.

7. Verbindungsanordnung nach Anspruch 5 und 6, **dadurch gekennzeichnet, dass** die Klammer (34) einen den ersten Auflageabschnitt (54) und den zweiten Auflageabschnitt (58) verbindenden Zentralabschnitt (62) aufweist, wobei der Zentralabschnitt (62) eine vom Halteabschnitt (22) abgewandte Oberseite aufweist, die im Wesentlichen eben ausgeführt ist.

8. Verbindungsanordnung nach einem der vorhergehenden Ansprüche, **dadurch gekennzeichnet, dass** im Halteabschnitt (22) Faserlagen (FL) des Keramikfaserverbundmaterials (CMC) durchlaufend gelegt sind.

9. Turbinenzwischengehäuse einer Gasturbine, insbesondere Fluggasturbine, mit einem Heißgas führenden Ringkanal, umfassend
wenigstens ein erstes Gehäuseelement, insbesondere ein Fairing des Turbinenzwischengehäuses,
wenigstens ein zweites Gehäuseelement, insbesondere ein Panel eines Turbinenzwischengehäuses,
**dadurch gekennzeichnet dass** es
wenigstens eine Verbindungsanordnung (10) nach einem der vorhergehenden Ansprüche aufweist, wobei das erste Gehäuseelement das erste Bauteil (12) aus keramischem Faserverbundmaterial (CMC) bildet und das zweite Gehäuseelement das zweite Bauteil (14) aus keramischem Faserverbundmaterial (CMC) bildet.

10. Turbinenzwischengehäuse nach Anspruch 9, **dadurch gekennzeichnet, dass** der Verbindungsbereich (16) zwischen dem ersten Gehäuseelement (12) und dem zweiten Gehäuseelement (14) den Heißgas führenden Ringkanal abdichtet.

11. Gasturbine, insbesondere Fluggasturbine, mit einem Turbinenzwischengehäuse nach einem der Ansprüche 9 oder 10.

## Claims

1. Connection assembly (10) comprising
a first component (12) and a second component (14), wherein the first component (12) and the second component (14) are arranged in a connection region (16, 18, 20) such that they overlap one another;
a connection means which contacts the first component (12) and the second component (14) such that the first component (12) and the second component (14) clampingly abut one another in the connection region (16), wherein the connection means comprises a clamp (34) resting on the first component (12) and on the second component (14) and has a screw connection (30, 38, 40) which is designed to fasten the clamp (34) to the first and to the second component (12, 14),
wherein the first component (12) and the second component (14) are produced from a ceramic fiber composite material (CMC), wherein the first component (12) has a retaining portion (22) which has a front face (26) facing the clamp (34), a rear face (28) facing away from the clamp, and a receiving opening (24),
and wherein the screw connection (30, 38, 40) has a bolt portion (30) that passes through the receiving opening (24), which bolt portion has a support portion (40) extending obliquely relative to the longitudinal axis (SA) of the bolt portion (30) on an end thereof that faces away from the clamp (34), which support portion abuts the rear face (28) of the retaining portion (22).

2. Connection assembly according to claim 1, **characterized in that** the retaining portion (22) has a convex portion (44) and a concave portion (46) along the front face (26) thereof, the clamp (34) being supported on the concave portion (46) of the front face (26).

3. Connection assembly according to either claim 1 or claim 2, **characterized in that** the retaining portion (22) has a concave portion (50) and a convex portion (52) along the rear face (28) thereof, the support portion (40) of the screw connection being supported on the concave portion (50) of the rear face (28).

4. Connection assembly according to any of the preceding claims, **characterized in that** the opening (24) of the retaining portion (22) is slot-shaped and has one open end such that the bolt portion (30) can be inserted into the slot-shaped opening (24) through the open end.

5. Connection assembly according to any of the preceding claims, **characterized in that** the clamp (34) has a first bearing portion (54) facing the retaining portion (22) of the first component (12), which bearing portion has a first clamping surface (56) resting on the first component (12), in particular on the concave portion (46) of the front face (26), the first clamping surface (56) preferably being curved, in particular convex.

6. Connection assembly according to any of the preceding claims, **characterized in that** the clamp (34) has a second bearing portion (58) facing the connection region (16), which bearing portion has a second clamping surface (60) resting on the second component (14), the second clamping surface (60) preferably being substantially planar.

7. Connection assembly according to claim 5 and claim 6, **characterized in that** the clamp (34) has a central portion (62) which connects the first bearing portion (54) and the second bearing portion (58), the central portion (62) having an upper face which faces away from the retaining portion (22) and is substantially planar.

8. Connection assembly according to any of the preceding claims, **characterized in that** fiber layers (FL) of the ceramic fiber composite material (CMC) are laid in the retaining portion (22) so as to run therethrough.

9. Intermediate turbine housing of a gas turbine, in particular an aircraft gas turbine, having an annular duct that conveys hot gas, the intermediate turbine housing comprising at least one first housing element, in particular a fairing of the intermediate turbine housing, at least one second housing element, in particular a panel of an intermediate turbine housing, **characterized in that** the intermediate turbine housing has at least one connection assembly (10) according to any of the preceding claims, the first housing element forming the first component (12) made of ceramic fiber composite material (CMC) and the second housing element forming the second component (14) made of ceramic fiber composite material (CMC).

10. Intermediate turbine housing according to claim 9, **characterized in that** the connection region (16) between the first housing element (12) and the second housing element (14) seals the annular duct that conveys hot gas.

11. Gas turbine, in particular an aircraft gas turbine, comprising an intermediate turbine housing according to either claim 9 or claim 10.

## Revendications

1. Dispositif de raccordement (10) comprenant
un premier composant (12) et un second composant (14), le premier composant (12) et le second composant (14) étant disposés à chevauchement dans une zone de raccordement (16, 18, 20) ;
un moyen de raccordement qui est en contact avec le premier composant (12) et le second composant (14) de telle sorte que le premier composant (12) et le second composant (14) soient fixés l'un à l'autre par serrage dans la zone de raccordement (16), le moyen de raccordement comprenant une attache (34) en appui sur le premier composant (12) et le second composant (14) et comportant un raccordement à vis (30, 38, 40) qui est conçu pour fixer l'attache (34) au premier et au second composant (12, 14),
le premier composant (12) et le second composant (14) étant fabriqués à partir d'un matériau composite céramique renforcé par des fibres (CMC), le premier composant (12) comportant une partie de retenue (22) pourvu d'un côté avant (26) tourné vers l'attache (34), d'un côté arrière (28) opposé à l'attache et d'une ouverture de réception (24),
et le raccordement à vis (30, 38, 40) comportant une partie formant boulon (30) qui passe à travers l'ouverture de réception (24), qui comporte une partie d'appui (40) qui s'étend obliquement par rapport à l'axe longitudinal de la partie formant boulon (30) au niveau de son extrémité tournée dos à l'attache (34) et qui est en appui sur le côté arrière (28) de la partie de retenue (22).

2. Dispositif de raccordement selon la revendication 1, **caractérisé en ce que** la partie de retenue (22) comporte une partie convexe (44) et une partie concave (46) le long de son côté avant (26), l'attache (34) prenant appui sur la partie convexe (46) du côté avant (26).

3. Dispositif de raccordement selon la revendication 1 ou 2, **caractérisé en ce que** la partie de retenue (22) comporte une partie concave (50) et une partie convexe (52) le long de son côté arrière (28), la partie d'appui (40) du raccordement à vis prenant appui sur la partie concave (50) du côté arrière (28).

4. Dispositif de raccordement selon l'une des revendications précédentes, **caractérisé en ce que** l'ouverture (24) de la partie de retenue (22) est réalisée en forme de fente pourvue d'une extrémité ouverte de telle sorte que la partie formant boulon (30) puisse être introduite dans l'ouverture en forme de fente (24) à travers l'extrémité ouverte.

5. Dispositif de raccordement selon l'une des revendications précédentes, **caractérisé en ce que** l'attache (34) comporte une première partie d'appui (54) tournée vers la partie de retenue (22) du premier composant (12) et pourvue d'une première surface de serrage (56) en appui sur le premier composant (12), en particulier sur la partie concave (46) du côté avant (26), la surface de serrage (56) étant formée de préférence de manière courbée, en particulier de manière convexe.

6. Dispositif de raccordement selon l'une des revendications précédentes, **caractérisé en ce que** l'attache (34) comporte une seconde partie d'appui (58) tournée vers la zone de raccordement (16) et pourvue d'une seconde surface de serrage (60) en appui sur second composant (14), la seconde surface de serrage (60) étant formée de préférence de manière sensiblement plate.

7. Dispositif de raccordement selon les revendications 5 et 6, **caractérisé en ce que** l'attache (34) comporte une partie centrale (62) raccordant la première partie d'appui (54) et la seconde partie d'appui (58), la partie centrale (62) comportant un côté supérieur tourné vers la partie de retenue (22) et formée de préférence de manière sensiblement plate.

8. Dispositif de raccordement selon les revendications précédentes, **caractérisé en ce que** des couches de fibres (CF) du matériau composite céramique renforcé par des fibres (CMC) sont posées de façon continue dans la partie de retenue (22).

9. Carter intermédiaire de turbine d'une turbine à gaz, en particulier de turbine à gaz d'avion, muni d'un conduit annulaire dirigeant le gaz chaud, comprenant
au moins un premier élément de carter, en particulier un carénage du carter intermédiaire de turbine,
au moins un deuxième élément de carter, en particulier un panneau d'un carter intermédiaire de turbine,
**caractérisé en ce qu'**il comporte au moins un dispositif de raccordement (10) selon l'une des revendications précédentes, le premier élément de carter formant le premier composant (12) en matériau composite céramique renforcé par des fibres (CMC) et le second élément de carter formant le second composant (14) en matériau céramique composite renforcé par des fibres (CMC).

10. Carter intermédiaire de turbine selon la revendication 9, **caractérisé en ce que** la zone de raccordement (16) entre le premier élément de carter (12) et le second élément de carter (14) étanchéifie le conduit annulaire dirigeant le gaz chaud.

11. Turbine à gaz, en particulier turbine à gaz d'avion, comprenant un carter intermédiaire de turbine selon la revendication 9 ou 10.
